# EUROPEAN PATENT APPLICATION

(11) **EP 2 947 424 A2**
(43) Date of publication of application: **25.11.2015**
(21) Application number: 14179914.8
(22) Date of filing: 05.08.2014
(51) Int. Cl.: G01D 3/08

(54) **A sensor apparatus and associated methods**

(30) Priority: 22.05.2014 EP 14169532
(71) Applicant: NXP B.V., 5656 AG Eindhoven (NL)
(72) Inventor: NG, Pei Sin, Redhill, Surrey RH1 1SH (GB)
(74) Representative: Miles, John Richard

(57) **Abstract**

A controller configured to:
receive an energy availability signal representative of an amount of electrical energy available for use by a sensor;
receive one or more energy consumption signals representative of energy consumption rates associated with a plurality of respective predefined sensing states of the sensor, each sensing state having a distinct level of sensing functionality; and
send a control signal to set the sensor to one of the predefined sensing states based on the energy consumption rate associated with that sensing state in combination with the amount of electrical energy available for use by the sensor.

## Description

The present disclosure relates to the field of sensors, and in particular, to sensors which can be set to a number of different sensing states with distinct sensing functionalities and energy consumptions according to an amount of available electrical energy.

Sensors can be used within buildings and streets to monitor environmental conditions of the surrounding environment in which they are deployed. Sensing stimuli include light intensity, temperature, relative humidity, atmospheric pressure and sound pressure. Sensors can be powered by electrical energy harvested from the surrounding environment. The rate of energy harvesting can vary with time, e.g. the harvesting rate of a solar cell typically varies from one hour, day and season to the next as a result of variations in the intensity of sunlight incident upon the solar cell. When there is a surplus of energy harvested, this energy may be exhausted as heat to prevent overcharging of the battery used to store the electrical energy. When there is a net energy deficit, on the other hand, the sensor may shutdown after exhausting the stored energy before resuming operation when the battery has been recharged to a minimum level. Operation can be short-lived when the sensor is operating in an energy deficit environment.

According to a first aspect, there is provided a controller configured to:
receive an energy availability signal representative of an amount of electrical energy available for use by a sensor;
receive one or more energy consumption signals representative of energy consumption rates associated with a plurality of respective predefined sensing states of the sensor, each sensing state having a distinct level of sensing functionality; and
send a control signal to set the sensor to one of the predefined sensing states based on the energy consumption rate associated with that sensing state in combination with the amount of electrical energy available for use by the sensor.

The controller can essentially match the functionality of the sensor with the amount of energy available in order to control energy consumption. In this way, stored energy reserves can be better-utilised, the length of sensor operation can be extended, and the chances of unintentional shut-down of the sensor can be reduced.

The controller may be configured to:
estimate an amount of time that the sensor can operate in each sensing state based on the energy consumption rate associated with that sensing state in combination with the amount of electrical energy available for use by the sensor; and
send a control signal to set the sensor to a sensing state that can be sustained for a predetermined period of time.

The controller may be configured to:
receive one or more functionality signals representative of the level of sensing functionality associated with each sensing state; and
send a control signal to set the sensor to a sensing state with the highest level of sensing functionality for the amount of electrical energy available for use by the sensor.

The energy availability signal may comprise an energy harvesting signal representative of an energy harvesting rate at which electrical energy is generated by an energy harvester. The controller may be configured to send a control signal to set the sensor to a sensing state which has an energy consumption rate that is equal to or less than the energy harvesting rate.

The controller may be configured to send a control signal to set the sensor to a lower consumption state from a higher consumption state when the energy harvesting rate falls below the energy consumption rate associated with the higher consumption state, and may be configured to send a control signal to set the sensor to the higher consumption state from the lower consumption state when the energy harvesting rate is at least equal to the energy consumption rate associated with the higher consumption state.

The controller may be configured to send a control signal to set the sensor to one of the predefined sensing states based on the current energy harvesting rate of the energy harvester, a previous energy harvesting rate of the energy harvester, or an average energy harvesting rate of the energy harvester. The controller may be configured to determine the average energy harvesting rate of the energy harvester by averaging the energy harvesting rate of the energy harvester over a predetermined period of time. The controller may be configured to determine the average energy harvesting rate of the energy harvester by averaging the energy harvesting rate of the energy harvester over a predetermined period of time using a simple moving average or an exponential moving average.

The energy availability signal may comprise an energy storage signal representative of an amount of electrical energy stored in an energy storage device. The controller may be configured to send a control signal to set the sensor to a lower consumption state from a higher consumption state when the amount of electrical energy stored in the energy storage device falls below a first predefined level, and may be configured to send a control signal to set the sensor to the higher consumption state from the lower consumption state when the amount of electrical energy stored in the energy storage device is at least equal to a second predefined level. The first and second predefined levels may be the same level or different levels.

The controller may be configured to initiate a controlled shutdown procedure on the sensor when the amount of electrical energy stored in the energy storage device falls to a minimum predefined level.

The controller may be configured to:
receive the energy availability signal and energy consumption signals in the form of a net energy rate signal, the net energy rate signal representative of a difference between an energy harvesting rate at which electrical energy is generated by an energy harvester and the energy consumption rate associated with a predefined sensing state; and
send a control signal to set the sensor to one of the predefined sensing states based on the difference between the energy harvesting rate and the energy consumption rate.

The controller may be configured to send a control signal to set the sensor to a sensing state which results in a positive or neutral net energy rate. The controller may be configured to send a control signal to set the sensor to a lower consumption state from a higher consumption state when the net energy rate signal indicates a negative net energy rate, and may be configured to send a control signal to set the sensor to a higher consumption state from a lower consumption state when the net energy rate signal indicates a positive net energy rate.

The plurality of predefined sensing states may include an off or stand-by state having a sensing functionality and associated energy consumption rate of substantially zero.

The sensing functionality of each sensing state may comprise one or more of a predefined: type of sensed stimuli, number of sensed stimuli, sensing resolution, sensing precision, sensing frequency, transmission behaviour, transmission range, transmission frequency, type of transmitted data and amount of transmitted data.

The sensed stimuli may comprise one or more primary stimuli and/or one or more secondary or additional stimuli based on changes in the primary stimuli. The primary stimuli may comprise one or more of light intensity, temperature, relative humidity, atmospheric pressure and sound pressure. The secondary stimuli may comprise one or more of motion, direction of motion and the opening/closing of a door or window. The amount of transmitted data may comprise one or more of 5 bit digital data and 16 bit digital data.

The energy storage device may comprises a battery. The controller may be configured to receive the energy storage signal by measuring the battery voltage. The measured battery voltage may be a non-linear battery voltage. The controller may be configured to receive the energy storage signal by converting the non-linear battery voltage into a linear battery availability signal using a linearization function.

The sensor may comprise a plurality of sensors. The controller may be configured to send one or more control signals to set each of the sensors to one of the predefined sensing states based on an energy consumption rate associated with that sensing state in combination with the amount of electrical energy available for use by the sensor.

The energy storage device and/or energy harvester may be common to the plurality of sensors. The energy storage device and/or energy harvester may be associated with a respective sensor of the plurality of sensors.

According to a further aspect, there is provided a sensor apparatus comprising any controller described herein. The sensor apparatus may comprise one or more of the sensor, the energy storage device and the energy harvester.

The energy storage device may comprise one or more of a battery and a capacitor.

The energy harvester may be configured to generate the electrical energy using one or more of light energy, wind energy, wave energy, tidal energy, vibrational energy and thermal energy.

The sensor apparatus may comprise a data storage medium configured to store data relating to the amount of electrical energy available for use by the sensor, the amount of electrical energy stored in the energy storage device, the energy harvesting rate at which electrical energy is generated by the energy harvester, the energy consumption rates associated with the plurality of respective predefined sensing states and/or the level of sensing functionality associated with each sensing state. The controller may be configured to receive the energy availability signal, energy storage signal, energy harvesting signal, one or more energy consumption signals and/or one or more functionality signals from the data storage medium.

The sensor apparatus may comprise a plurality of controllers each associated with a respective sensor, energy storage device and/or energy harvester.

The sensor may comprise a plurality of sensors positioned in substantially the same or different locations.

According to a further aspect, there is provided a method comprising:
receiving an energy availability signal representative of an amount of electrical energy available for use by a sensor;;
receiving one or more energy consumption signals representative of energy consumption rates associated with a plurality of respective predefined sensing states of the sensor, each sensing state having a distinct level of sensing functionality; and
sending a control signal to set the sensor to one of the predefined sensing states based on an energy consumption rate associated with that sensing state in combination with the amount of electrical energy available for use by the sensor.

The steps of any method disclosed herein do not have to be performed in the exact order disclosed, unless explicitly stated or understood by the skilled person.

Corresponding computer programs for implementing one or more steps of the methods disclosed herein are also within the scope of the present disclosure and are encompassed by one or more of the described example embodiments.

One or more of the computer programs may, when run on a computer, cause the computer to configure any apparatus, including a circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, or may be embodied as a transient signal. Such a transient signal may be a network download, including an internet download.

A description is now given, by way of example only, with reference to the accompanying drawings, in which:-
Figure 1 illustrates schematically a sensor apparatus comprising the controller described herein;
Figure 2 illustrates schematically an energy storage device for use in the sensor apparatus of Figure 1;
Figure 3 illustrates schematically the energy harvesting rate in relation to the energy consumption rates of the respective sensing states;
Figure 4 illustrates schematically the energy storage device of Figure 2 showing predefined energy levels associated with the respective sensing states;
Figure 5a illustrates schematically another sensor apparatus comprising the controller described herein;
Figure 5b illustrates schematically another sensor apparatus comprising the controller described herein;
Figure 5c illustrates schematically another sensor apparatus comprising the controller described herein;
Figure 6a illustrates schematically the main steps of a method of using the controller described herein; and
Figure 6b illustrates schematically the main steps of another method of using the controller described herein.

One or more examples disclosed herein relate to environmental sensors which can be powered by energy harvesters, can make efficient use of generated electrical energy and can be unlikely to be forced to shut down abruptly.

Later examples depicted in the figures have been provided with reference numerals that correspond to similar features of earlier described examples. For example, feature number 502 can also correspond to feature number 102, etc. These numbered features may appear in the figures but may not be directly referred to within the description of these particular examples. This has been done to aid understanding, particularly in relation to the features of similar earlier described examples.

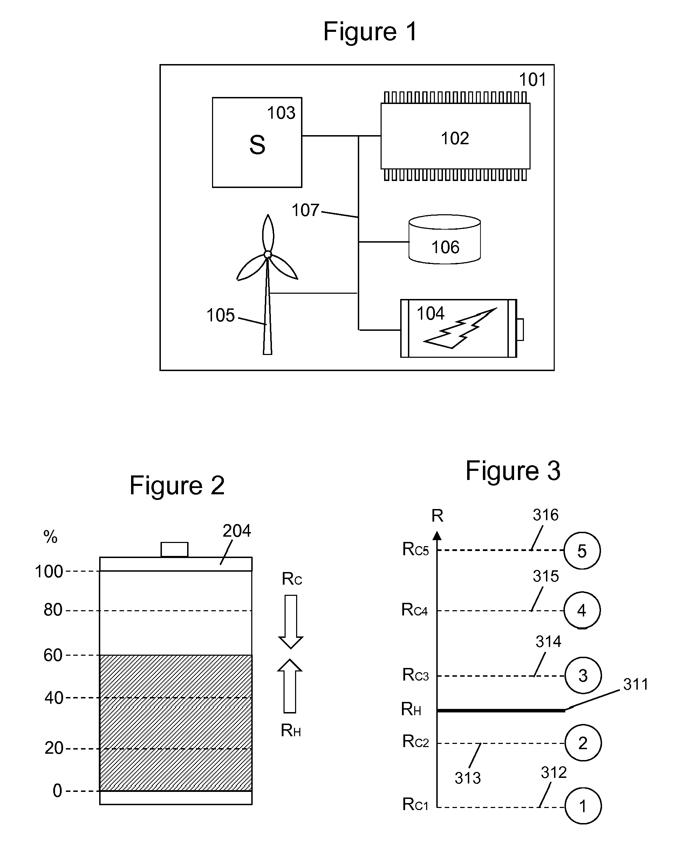

Figure 1 shows a sensor apparatus 101 comprising a controller 102, a sensor 103, an energy storage device 104, an energy harvester 105 and a data storage medium 106, which are in communication with one another via wired or wireless connections 107. The sensor 103 is configured to operate in a plurality of predefined sensing states, each sensing state having a distinct sensing functionality and associated energy consumption rate. Any sensor data generated by the sensor 103 during the sensing operation may be stored in the data storage medium 106. The energy harvester 105 is configured to generate electrical energy at an energy harvesting rate (e.g. using one or more of light energy, wind energy, wave energy, tidal energy, vibrational energy and thermal energy), and provide the generated electrical energy to the energy storage device 104. The energy harvesting rate may be an amount of energy harvested during a predetermined unit/period of time. The energy storage device 104 in this example is configured to store the electrical energy provided by the energy harvester 105 for use by the sensor 103. The energy storage device 104 may comprise a battery and/or a capacitor, for example.

Figure 2 illustrates schematically an energy storage device 204 for use in the sensor apparatus 101 of Figure 1. As shown in this figure, the amount of electrical energy stored in the energy storage device 204 at any one time can range from a minimum of 0% of the maximum capacity (i.e. empty) to a maximum of 100% of the maximum capacity (i.e. full). The amount of stored electrical energy will generally increase with the energy harvesting rate of the energy harvester R_{H} and decrease with the energy consumption rate of a sensing state R_{C}. It will be appreciated that the energy storage device 204 can provide energy for other applications and processes that will also cause the amount of stored energy to decrease.

Returning to Figure 1, the controller 102 is configured to receive an energy storage signal representative of an amount of electrical energy stored in the energy storage device 104, an energy harvesting signal representative of an energy harvesting rate at which electrical energy is generated by the energy harvester 105, and one or more energy consumption signals representative of energy consumption rates associated with a plurality of respective predefined sensing states of the sensor 103. The energy storage signal, energy harvesting signal and energy consumption signals may be received from the energy storage device 104, energy harvester 105 and sensor 103, respectively, or they may be received from the data storage medium 106. The energy storage signal and the energy harvesting signal are examples of energy availability signals which represent an amount of electrical energy available for use by the sensor 103.

"Receiving signals" in this respect may comprise the reception of signals transmitted from the various components 103-106 to the controller 102, the reading of data stored on the various components 103-106 by the controller 102 and/or the measurement of a property of the various components 103-106 by the controller 102. For example, the energy storage device 104 may comprise a battery, and the controller 102 may be configured to receive the energy storage signal by measuring a battery voltage. In examples where the measured battery voltage is non-linear, the controller 102 may be configured to convert the non-linear battery voltage into a linear battery availability signal using a linearization function. Additionally or alternatively, the controller 102 may be configured to receive the energy consumption signals by reading data associated with the respective sensing states, which may be stored on the data storage medium 106.

Following receipt of the various signals, the controller 102 is configured to send a control signal to set the sensor 103 to one of the predefined sensing states based on the energy consumption rate associated with that sensing state in combination with (i) the amount of electrical energy stored in the energy storage device 104, (ii) the energy harvesting rate of the energy harvester 105 and/or (iii) any other energy availability signal. In this way, the controller 102 can match the functionality of the sensor 103 with the amount of energy available in order to control energy consumption. This can allow stored energy reserves to be better-utilised, the length of sensor operation to be extended, and the chances of unintentional shut-down of the sensor 103 to be reduced.

As mentioned above, the sensing functionality (and possibly the associated energy consumption rate) of each sensing state is distinct. Each state may differ in terms of the type of sensed stimuli, the number of sensed stimuli, the sensing resolution, the sensing precision, the sensing frequency, the transmission behaviour, the transmission range, the transmission frequency, the type of transmitted data and the amount of transmitted data, etc.

For example, the sensed stimuli may comprise one or more of light intensity, temperature, relative humidity, atmospheric pressure, sound pressure, motion and changes thereof. The sensor 103 may be configured to transmit (e.g. via a wired or wireless connection) sensor data to a processor continuously, periodically or on request. To enable transmission, the sensor 103 may comprise a wired or wireless transmitter or transceiver (not shown). It may also comprise a wired or wireless receiver or transceiver configured to receive data requests from a user (not shown). In higher energy consumption sensing states (which may be shortened to "higher consumption states" herein), the sensor 103 may also be configured to retransmit sensor data if no acknowledgement is received from the recipient, whilst in lower energy consumption sensing states (which may be shortened to "lower consumption states" herein) the sensor 103 may transmit the sensor data only once. Similarly, in higher consumption sensing states, the sensor 103 may be configured to provide diagnostic information to enable identification of an error or fault in the sensor 103, whilst in lower consumption sensing states the sensor 103 may provide no such information. Also, a first, higher, consumption state may provide greater sensing precision by outputting a larger amount of data than a second, lower, consumption state. For example, 16 bit digital data may be output in a higher consumption state and 5 bit digital data may be output in a lower consumption state.

Higher consumption sensing states can also enable secondary, or additional, stimuli to be sensed by monitoring one or more primary stimuli. For example, motion detection could be implemented by comparing light intensity levels between "frames", and where multiple sensors 103 are available (as discussed later), the direction of motion could also be determined. Another example is the use of a sensor 103 to detect the opening of a door which separates an air-conditioned indoor environment from an outdoor environment, such as the door of a shop or fridge. In this scenario, a sensor 103 deployed near the door could be configured to monitor the relative humidity such that a variation in humidity is indicative of the door being opened.

The sensor 103 may advantageously comprise a range of different sensing states of increasing/decreasing functionality and associated energy consumption. This aids the controller 102 in setting the sensor 103 to a state which suitably matches the amount of electrical energy stored in the energy storage device 104 and/or the energy harvesting rate of the energy harvester 105.

The controller 102 can be configured to set the sensing state of the sensor 103 according to a number of different selection criteria. Examples of selection criteria include sensing duration and functionality. In order to achieve a particular sensing duration, the controller 102 may be configured to estimate an amount of time that the sensor 103 can operate for in each sensing state based on the energy consumption rate associated with that sensing state in combination with the amount of electrical energy stored in the energy storage device 104 and/or the energy harvesting rate of the energy harvester 105, and send a control signal to set the sensor 103 to a sensing state that can be sustained for a predetermined period of time.

The time estimation may be based on a current, previous or average energy harvesting rate, an amount of electrical energy currently stored in the energy storage device 104, and/or an amount of electrical energy predicted to be stored in the energy storage device 104 determined using the current, previous or average energy harvesting rate. Given that energy harvesting rates can vary over time, estimations based on energy harvesting rates may be less accurate than those based on the amount of electrical energy currently stored in the energy storage device 104. That said, the use of an average energy harvesting rate can help to smooth out any variations. In this scenario, the controller 102 may be configured to determine the average energy harvesting rate by calculating the mean energy harvesting rate of the energy harvester 105 over a predetermined period of time. The predetermined period of time over which the harvesting rate is averaged may depend on the type of energy harvester 105. For example, the harvesting rate of a solar cell or wind turbine could be averaged over a day, month, season or year. This may be achieved in practice by implementing an aggregator function which averages the energy harvesting rate using a simple moving average or a more complex exponential moving average.

As stated above, the controller 102 could also be configured to set the sensor 103 to one of the predefined sensing states in order to achieve a particular functionality. In this scenario, the controller 102 may be configured to receive one or more functionality signals representative of the level of sensing functionality associated with each sensing state, and send a control signal to set the sensor 103 to a sensing state with the highest level of sensing functionality for the amount of stored electrical energy/harvesting rate that is available. The functionality signals could be received by reading corresponding data from the data storage medium 106, e.g. from a database or look-up table that includes data corresponding to the energy consumption rates of the sensing states.

In general, an aim of the controller 102 is to ensure that the sensor 103 is able to monitor one or more stimuli of the surrounding environment without consuming so much electrical energy that the sensor 103 is forced to shut down. There are a number of different ways in which the controller 102 can utilise the energy storage, energy harvesting and energy consumption signals to achieve this aim. In one example, the controller 102 is configured to send a control signal to set the sensor 103 to a sensing state which has an energy consumption rate that is equal to or less than the energy harvesting rate. This is a relatively simple approach which does not necessarily take account of the stored energy.

Figure 3 illustrates schematically the energy harvesting rate R_{H} 311 in relation to the energy consumption rates R_{C1}-R_{C5} 312-316 of the respective sensing states "1 "-"5" to help illustrate this approach. In this figure, the energy harvesting rate 311 is greater than the energy consumption rates of sensing state "1" 312 and sensing state "2" 313, but lower than the energy consumption rates of sensing states "3"-"5" 314-316. To ensure that the energy consumption of the sensor 103 does not exceed supply, the controller 102 would set the sensor 103 to sensing state "1" or "2", the choice of which could depend on one or more selection criteria (e.g. sensing duration and functionality). The sensor 103 could then remain in this state until there was a change in the energy harvesting rate, for example until the energy harvesting rate R_{H} exceeds the next highest energy consumption rate R_{C1}-R_{C5}, or falls below the next lowest energy consumption rate R_{C1}-R_{C5}.

Given that the energy harvesting rate can vary over time, the controller 102 may be configured to switch between different sensing states to accommodate any changes in the harvesting rate. For example, the controller 102 could be configured to send a control signal to set the sensor 103 to a lower consumption state from a higher consumption state when the energy harvesting rate falls below the energy consumption rate associated with the higher consumption rate. Similarly, the controller 102 could be configured to send a control signal to set the sensor 103 to a higher consumption state from a lower consumption state when the energy harvesting rate is at least equal to the energy consumption rate associated with the higher consumption state.

Rather than receiving separate energy availability and energy consumption signals, the controller 102 may be configured to receive a net energy rate signal representative of a difference between the energy harvesting rate and the energy consumption rate. In this scenario, the controller 102 could be configured to send a control signal to set the sensor 103 to one of the predefined sensing states based on the difference between the energy harvesting rate and the energy consumption rate. For example, the controller 102 may be configured to send a control signal to set the sensor to a sensing state which results in a positive or neutral net energy rate (implying that the energy harvesting rate is at least equal to the energy consumption rate). Furthermore, the controller 102 may be configured to send a control signal to set the sensor 103 to a lower consumption state from a higher consumption state when the net energy rate signal indicates a negative net energy rate (implying that the energy harvesting rate is lower than the energy consumption rate). It may also be configured to send a control signal to set the sensor 103 to a higher consumption state from a lower consumption state when the net energy rate signal indicates a positive net energy rate (indicating that the energy harvesting rate is higher than the energy consumption rate).

As well as, or instead of, determining the sensing state of the sensor 103 based on the energy harvesting rate, the controller 102 may determine it based on the amount of electrical energy stored in the energy storage device 104. This approach can involve the use of predefined energy levels which are used to control when the sensor 103 should be set to a particular sensing state. The predefined energy levels could be chosen, for example, to allow operation of the sensor 103 for a predetermined period of time at an energy harvesting rate of zero.

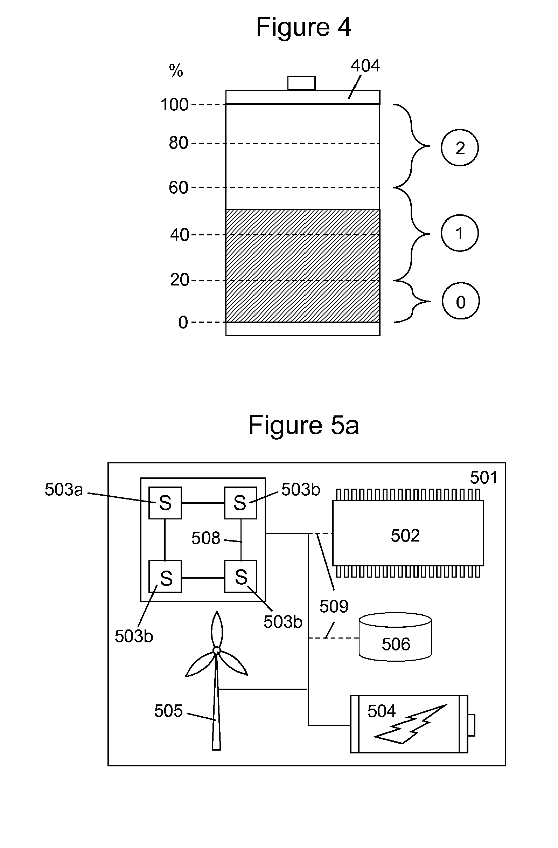

Figure 4 illustrates schematically the energy storage device 404 of Figure 2 showing the energy levels associated with some of the predefined sensing states "0", "1" and "2". In this example, the sensor 103 would operate in sensing state "0" when the energy storage device 404 is between 0% and 20% full; sensing state "1" when the energy storage device 404 is between 21% and 60% full; and sensing state "2" when the energy storage device is between 61% and 100% full. The lowest consumption state "0" is an off or stand-by state having a sensing functionality and associated energy consumption of substantially zero.

In this scenario, the controller 102 may be configured to send a control signal to set the sensor 103 to a lower consumption state from a higher consumption state when the amount of electrical energy stored in the energy storage device 404 falls below a first predefined level. Similarly, the controller 102 may be configured to send a control signal to set the sensor 103 to a higher consumption state from a lower consumption state when the amount of electrical energy stored in the energy storage device 404 is at least equal to a second predefined level. The first and second predefined levels may be the same or different levels. The use of different energy levels may allow the controller 102 to account for hysteresis in the amount of electrical energy stored in the energy storage device 404. This can help to prevent the controller from repeatedly switching the sensor 103 between different states within a short period of time, which may be unnecessary.

As an additional feature, the controller 102 may be configured to initiate a controlled shutdown procedure on the sensor 103 when the amount of electrical energy stored in the energy storage device 404 falls to a minimum predefined level. Such a procedure can be used to automatically back up any unsaved data before the sensor 103 is switched off and/or to generate an alert to a user indicative of the fact that the sensor 103 needs to power down due to a lack of electrical energy. This can help to ensure that none of the sensor data, or only limited data, is lost when there is an energy deficit, and also makes the user aware that there is going to be a break in the monitoring of the sensed stimuli. The alert can also provide the user with an opportunity to replace or charge the energy storage device 404 if it is important that there is no break in the monitoring of the sensed stimuli. The minimum predefined level may be the energy storage level at which the sensor 103 is set to the off or standby state (state "0") from the lowest operational sensing state (state "1"). In the illustrated example, this would be at 20% of the maximum capacity. It is important, of course, that the minimum predefined level is able to provide sufficient electrical energy to actually carry out the controlled shutdown procedure.

Figure 5a illustrates schematically another sensor apparatus 501. This time, the sensor apparatus 501 comprises a plurality of sensors 503a,b, and the controller 502 is configured to send one or more control signals to set each of the sensors 503a,b to a predefined sensing state as described above with respect to the single sensor 103. As shown in the figure, the controller 502, data storage medium 506, energy storage device 504 and energy harvester 505 are all common to the plurality of sensors 503a,b.

In this example, the sensors 503a,b are positioned in substantially the same location. For example, they may be part of the same integrated circuit or on the same printed circuit board. Each sensor 503a,b may be configured to sense the same or different stimuli. When the sensors 503a,b are positioned in substantially the same location, the magnitude of a particular stimulus at each of the sensors 503a,b is likely to be much the same. This aspect may be exploited to offer tolerance against sensor failures and sensor anomalies via the use of additional or redundant sensors 503a,b to provide a more robust sensor apparatus 501. For example, when there is sufficient energy available to the sensors 503a,b, the controller 502 may be configured to set additional sensors 503b positioned in substantially the same location as a first sensor 503a to the same sensing state as the first sensor 503a from an otherwise off or standby state. Through the use of these additional sensors 503b, it can be possible to detect when the first sensor 503a is not functioning as it should be by comparison of the generated sensor data. This diagnostic functionality may only be provided when the energy storage device 504 is at least partially full and/or the energy harvesting rate is at least equal to the overall energy consumption rate of the sensors 503a,b.

Another feature which could be implemented when there is sufficient electrical energy available is the relaying of sensor data between the various sensors 503a,b. For example, by setting the sensors to the appropriate sensing states, one of the sensors 503a could be designated to receive sensor data, or any other data, from each of the other sensors 503b for subsequent readout by a user. This feature could simplify the readout process for the user by removing the need to read each sensor 503a,b individually, but may require additional electrical energy to power the relay process. Reference numeral 508 in Figure 5a denotes wired or wireless connections between the various sensors 503a,b for relay purposes.

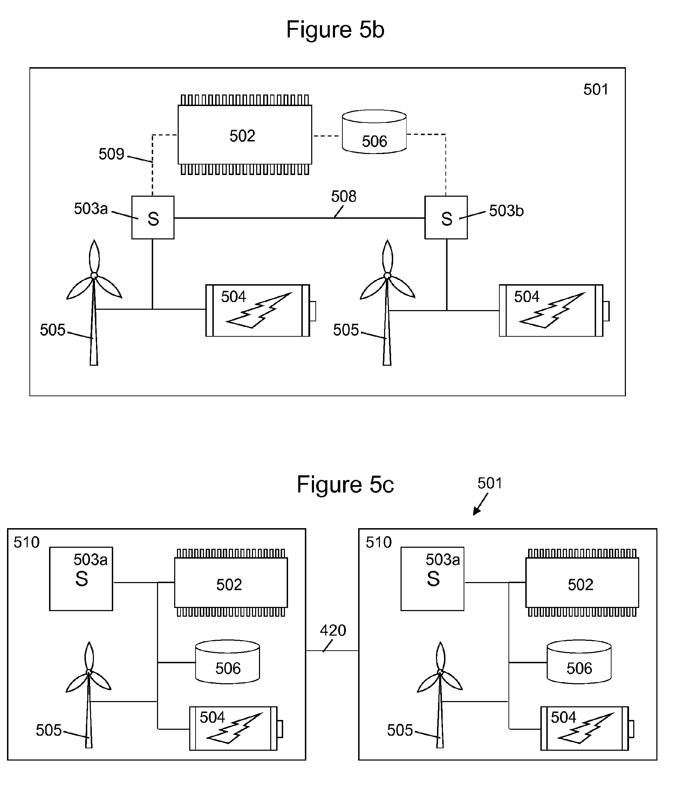

Figure 5b illustrates schematically another sensor apparatus 501 comprising a plurality of sensors 503a,b. In this example, each sensor 503a,b is associated with a respective energy storage device 504 and energy harvester 505, whilst a common controller 502 is used to control the sensing state of each sensor 503a,b and a common data storage medium 506 is used to store the data associated with each sensor 503a,b. Furthermore, each of the sensors 503a,b are positioned at substantially different locations, and may be configured to sense the same of different stimuli. As shown, wired or wireless connections 508 could be used between the sensors 503a,b in order to relay data therebetween.

In both of the examples shown in Figures 5a and 5b, the energy storage device(s) 504 and energy harvester(s) 505 may be located in proximity to the sensors 503a,b in order to facilitate the provision of electrical energy to the sensors 503a,b. In contrast, the controller 502 and data storage medium 506 may be located in proximity to, or remote from, the sensors 503a,b, as indicated by the dashed connections 509.

Figure 5c illustrates schematically yet another sensor apparatus comprising a plurality of sensors 503a,b. In this example, the sensor apparatus 501 comprises multiple controllers 502 and data storage media 506, each associated with a respective sensor 503a,b, energy storage device 504 and energy harvester 505. This time, the controllers 502 and data storage media 506 are located in proximity to their associated sensors 503a,b, which themselves may be located in the same or different locations. Essentially, therefore, each sensor 503a,b and its associated components 502, 504-506 form a separate self-contained sensor unit 510 capable of monitoring one or more stimuli in its local environment. As illustrated by the wired or wireless connection 508, however, these self-contained sensor units 510 may be configured to communicate with one another for relay purposes.

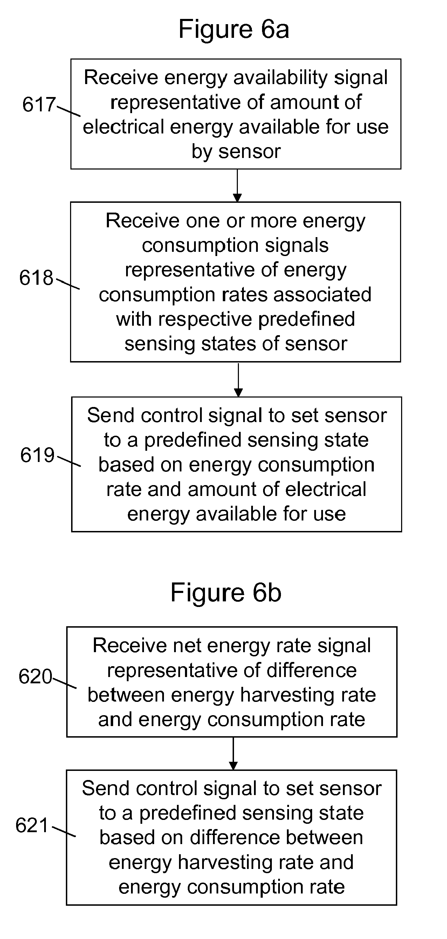

Figure 6a illustrates schematically the main steps of a method of using the controller described herein. As shown, the method comprises:
receiving 617 an energy availability signal representative of an amount of electrical energy available for use by a sensor;
receiving 618 one or more energy consumption signals representative of energy consumption rates associated with a plurality of respective predefined sensing states of the sensor, each sensing state having a distinct level of sensing functionality; and
sending 619 a control signal to set the sensor to one of the predefined sensing states based on an energy consumption rate associated with that sensing state in combination with the amount of electrical energy available for use by the sensor.

Figure 6b illustrates schematically the main steps of another method of using the controller described herein. The method comprises:
receiving 620 a net energy rate signal representative of a difference between an energy harvesting rate at which electrical energy is generated by an energy harvester and an energy consumption rate associated with a predefined sensing state; and
sending 621 a control signal to set the sensor to one of the predefined sensing states based on the difference between the energy harvesting rate and the energy consumption rate.

It will be appreciated that any components that are described herein as being coupled or connected could be directly or indirectly coupled or connected. That is, one or more components could be located between two components that are said to be coupled or connected whilst still enabling the required functionality to be achieved.

## Claims

1. A controller configured to:
receive an energy availability signal representative of an amount of electrical energy available for use by a sensor;
receive one or more energy consumption signals representative of energy consumption rates associated with a plurality of respective predefined sensing states of the sensor, each sensing state having a distinct level of sensing functionality; and
send a control signal to set the sensor to one of the predefined sensing states based on the energy consumption rate associated with that sensing state in combination with the amount of electrical energy available for use by the sensor.

2. The controller of claim 1, wherein the controller is configured to:
estimate an amount of time that the sensor can operate in each sensing state based on the energy consumption rate associated with that sensing state in combination with the amount of electrical energy available for use by the sensor; and
send a control signal to set the sensor to a sensing state that can be sustained for a predetermined period of time.

3. The controller of claim 1 or 2, wherein the controller is configured to:
receive one or more functionality signals representative of the level of sensing functionality associated with each sensing state; and
send a control signal to set the sensor to a sensing state with the highest level of sensing functionality for the amount of electrical energy available for use by the sensor.

4. The controller of any preceding claim, wherein the energy availability signal comprises an energy harvesting signal representative of an energy harvesting rate at which electrical energy is generated by an energy harvester, and wherein the controller is configured to send a control signal to set the sensor to a sensing state which has an energy consumption rate that is equal to or less than the energy harvesting rate.

5. The controller of claim 4, wherein the controller is configured to send a control signal to set the sensor to a lower consumption state from a higher consumption state when the energy harvesting rate falls below the energy consumption rate associated with the higher consumption state, and is configured to send a control signal to set the sensor to the higher consumption state from the lower consumption state when the energy harvesting rate is at least equal to the energy consumption rate associated with the higher consumption state.

6. The controller of claim 4 or 5, wherein the controller is configured to send a control signal to set the sensor to one of the predefined states based on the current energy harvesting rate of the energy harvester, a previous energy harvesting rate of the energy harvester, or an average energy harvesting rate of the energy harvester.

7. The controller of any preceding claim, wherein the energy availability signal comprises an energy storage signal representative of an amount of electrical energy stored in an energy storage device, and wherein the controller is configured to send a control signal to set the sensor to a lower consumption state from a higher consumption state when the amount of electrical energy stored in the energy storage device falls below a first predefined level, and is configured to send a control signal to set the sensor to the higher consumption state from the lower consumption state when the amount of electrical energy stored in the energy storage device is at least equal to a second predefined level.

8. The controller of claim 7, wherein the controller is configured to initiate a controlled shutdown procedure on the sensor when the amount of electrical energy stored in the energy storage device falls to a minimum predefined level.

9. The controller of any preceding claim, wherein the controller is configured to:
receive the energy availability signal and energy consumption signals in the form of a net energy rate signal, the net energy rate signal representative of a difference between an energy harvesting rate at which electrical energy is generated by an energy harvester and the energy consumption rate associated with a predefined sensing state; and
send a control signal to set the sensor to one of the predefined sensing states based on the difference between the energy harvesting rate and the energy consumption rate.

10. The controller of any preceding claim, wherein the plurality of predefined sensing states include an off or stand-by state having a sensing functionality and associated energy consumption rate of substantially zero.

11. The controller of any preceding claim, wherein the sensing functionality of each sensing state comprises one or more of a predefined: type of sensed stimuli, number of sensed stimuli, sensing resolution, sensing precision, sensing frequency, transmission behaviour, transmission range, transmission frequency, type of transmitted data and amount of transmitted data.

12. The controller of any preceding claim, wherein the sensor comprises a plurality of sensors, and wherein the controller is configured to send one or more control signals to set each of the sensors to one of the predefined sensing states based on an energy consumption rate associated with that sensing state in combination with the amount of electrical energy available for use by the sensor.

13. A sensor apparatus comprising the controller of any preceding claim and one or more of the sensor, the energy storage device and the energy harvester.

14. A method comprising:
receiving an energy availability signal representative of an amount of electrical energy available for use by a sensor;
receiving one or more energy consumption signals representative of energy consumption rates associated with a plurality of respective predefined sensing states of the sensor, each sensing state having a distinct level of sensing functionality; and
sending a control signal to set the sensor to one of the predefined sensing states based on an energy consumption rate associated with that sensing state in combination with the amount of electrical energy available for use by the sensor.

15. A computer program comprising computer code configured to perform the method of claim 14, configure the controller of any of claims 1 to 12, or configure the sensor apparatus of claim 13.
